Europäisches Patentamt

European Patent Office

Office européen des brevets

(11) Veröffentlichungsnummer: **0 234 027**
**B1**

(12) **EUROPÄISCHE PATENTSCHRIFT**

(45) Veröffentlichungstag der Patentschrift:
31.05.89

(51) Int. Cl.⁴: **F41F 23/02**

(21) Anmeldenummer: **86117368.0**

(22) Anmeldetag: **12.12.86**

(54) Verstellvorrichtung für eine Waffenanlage in einem gepanzerten Fahrzeug.

(30) Priorität: **22.02.86 DE 3605804**

(43) Veröffentlichungstag der Anmeldung:
**02.09.87 Patentblatt 87/36**

(45) Bekanntmachung des Hinweises auf die Patenterteilung:
**31.05.89 Patentblatt 89/22**

(84) Benannte Vertragsstaaten:
**DE FR GB IT**

(56) Entgegenhaltungen:
**CH-A- 5 088**
**CH-A- 315 150**
**GB-A- 569 257**

(73) Patentinhaber: **Dr.Ing.h.c. F. Porsche Aktiengesellschaft, Porschestrasse 42, D-7000 Stuttgart 40(DE)**

(72) Erfinder: **Jozefiak, Alfred, Dipl.-Ing. FH, Schillerstrasse 66, D-7531 Kieselbronn(DE)**
Erfinder: **Unfried, Claus-Dieter, Einsteinweg 6, D-7145 Markgröningen(DE)**

## Beschreibung

Die Erfindung bezieht sich auf eine Vorrichtung nach dem Oberbegriff des Anspruchs 1.

Es ist ein Stellelement für eine Waffenanlage in einem Panzerfahrzeug zum vertikalen Anheben in eine Feuerstellung und zum vertikalen Absenken in eine Transportstellung bekannt. Dieses Stellelement besteht aus einer axial auf die Waffenanlage einwirkenden Gasfeder sowie einem aus einer Schwinge bestehenden Führungsglied für diese Anlage, welches innerhalb des Fahrzeugs angeordnet und am Fahrzeugaufbau in mehreren Lagern abgestützt wird. Durch ein solches Führungsglied in Verbindung mit dem Stellelement ist im Fahrbetrieb bei ausgefahrener Waffenanlage keine stabile Lagerung gewährleistet, da sie gegenüber dem Fahrzeugaufbau aufgrund der Vielzahl von Lagerstellen, insbesondere bei Geländefahrt, Eigenbewegungen durchführen kann. Auch hat sich gezeigt, daß eine Gasfeder bei sehr hohen und sehr tiefen Temperaturen nicht immer störungsfrei arbeitet, so daß ein schnelles Absenken und Anheben nicht einwandfrei durchzuführen ist.

Aus der GB-A 569 257 ist eine Verstellvorrichtung für eine Waffenanlage eines Fahrzeugs bekannt, die einen mit einem Gewinde versehenen Rohrträger umfaßt, der über eine koaxial angeordnete Hülse mit einem korrespondierenden Gewinde zusammenarbeitet. Durch eine Verdrehung dieser Hülse auf dem Rohrträger erfolgt ein vertikales Heraus- und Hineinfahren des Trägers aus bzw. in das Fahrzeug.

Aufgabe der Erfindung ist es, eine Verstellvorrichtung für eine Waffenanlage zu schaffen, die manuell einfach und schnell wirkend zu bedienen ist und eine feste Lagerung in jeder Position der Waffenanlage gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Bei luftverlastbaren gepanzerten Fahrzeugen ist es aufgrund des begrenzten Ladeprofils, z.B. in einem Hubschrauber, einerseits erforderlich, daß das Fahrzeug ein kleines Querschnittsprofil aufweist. Zum Abfeuern von Raketen ist es aber andererseits zur Vermeidung von Beschädigungen am Fahrzeug notwendig, das Rohr der Waffenanlage so weit über die Kontur des Fahrzeugs anzuheben, daß die Sicherheitszone der Waffenanlage eingehalten wird. Außerdem ist es bei Fahrt im Gelände von Vorteil, wenn die Waffenanlage in Transportstellung steht, damit der Fahrzeugschwerpunkt tief liegt und somit in günstiges Fahrverhalten erzielt wird.

Die mit der Erfindung hauptsächlich erzielten Vorteile bestehen darin, daß solche Lagerstellen an der Vorrichtung vermieden werden, die instabile Positionen der Waffenanlage hervorrufen. So ist ein ins Fahrzeug ragender Rohrträger der Waffenanlage über umfangsseitig angeordnete Halterollen und darüber hinaus noch über Betätigungsrollen radial und axial stabil geführt.

Die Bedienung der mechanischen Stellvorrichtung ist in einfacher Weise manuell über das Handrad vom Benutzer möglich, wobei entsprechend der Ausführung des Gewindes am Rohrträger eine gewünschte Ausfahrzeit bzw. Einfahrzeit der Waffenanlage erzielbar ist.

Die Endstellungen der Waffenanlage werden vorzugsweise durch Signale von Enschaltern markiert, so daß gewährleistet ist, daß nur in einer voll ausgefahrenen Position der Waffenanlage eine Inbetriebnahme möglich wird.

Ein Ausführungsbeispiel der Erfindung ist in der Zeichnung dargestellt und wird im folgenden näher beschrieben.

Es zeigt

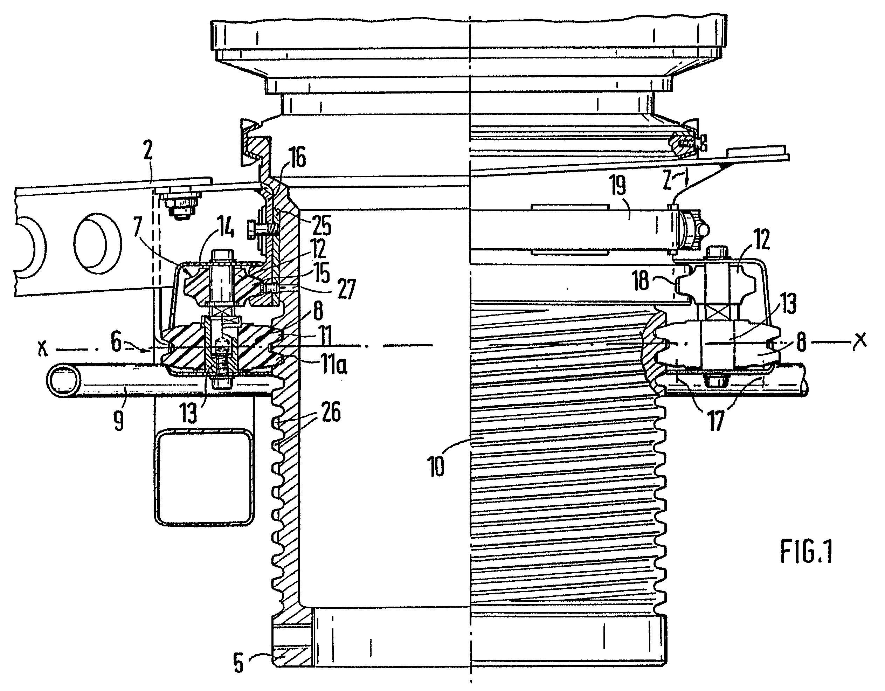

Fig. 1 eine Seitenansicht einer Verstellvorrichtung einer Waffenanlage in einem gepanzerten Fahrzeug, teilweise im Schnitt,

Fig. 2 einen Seitenansicht der Waffenanlage in Transportstellung,

Fig. 3 eine Seitenansicht der Waffenanlage in Feuerstellung,

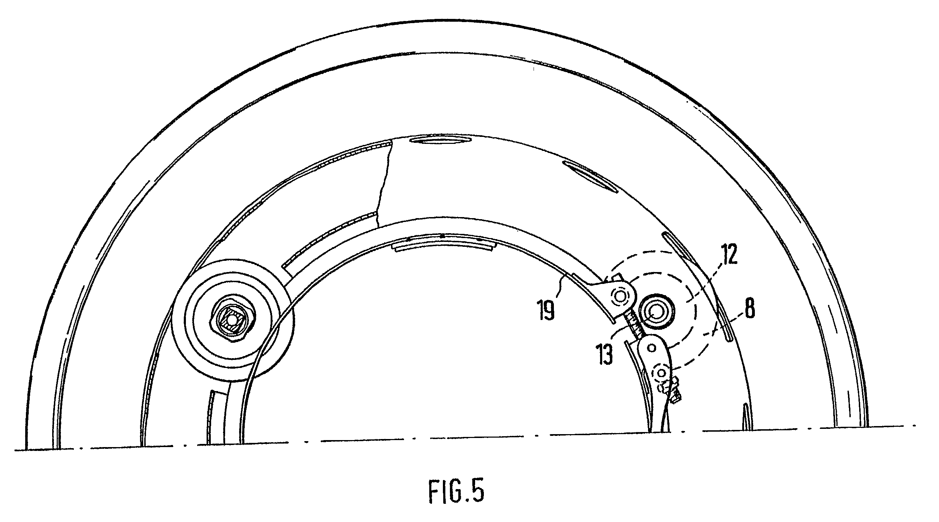

Fig. 4 einen Schnitt nach der Linie IV-IV der Fig. 3 und

Fig. 5 eine Ansicht auf die Verstellvorrichtung in Pfeilrichtung Z der Fig. 1 gesehen.

Ein gepanzertes Fahrzeug 1 weist eine im Aufbau 2 gelagerte Waffenanlage 3 für den Abschuß von Raketen auf. Dieses Anlage umfasst im wesentlichen ein Rohr 4 und einen mit diesem verbundenen, in den Fahrzeugaufbau 2 ragenden Rohrträger 5 auf.

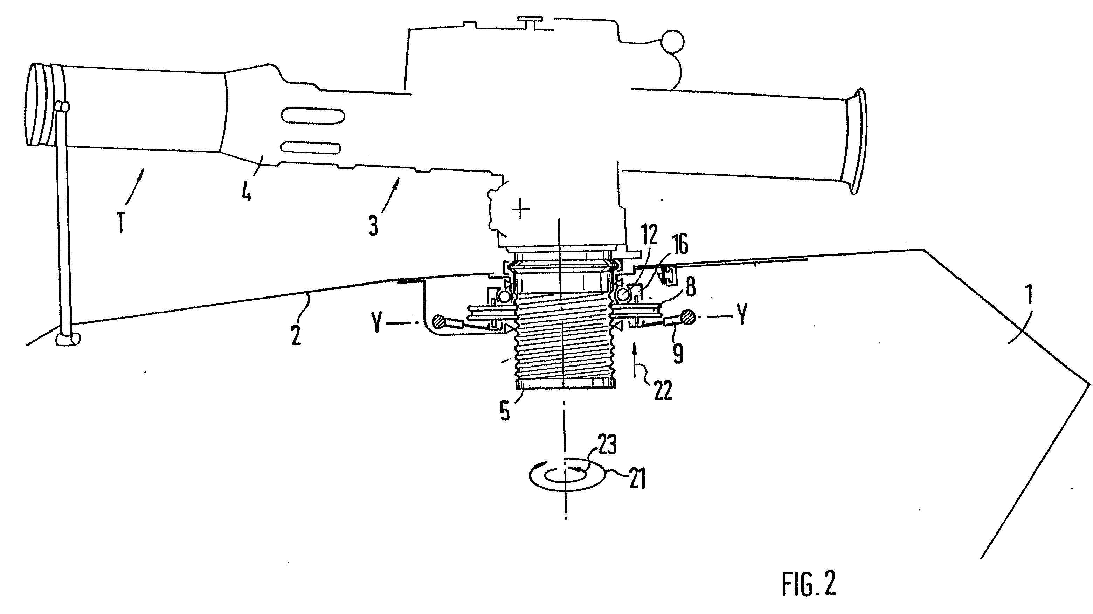

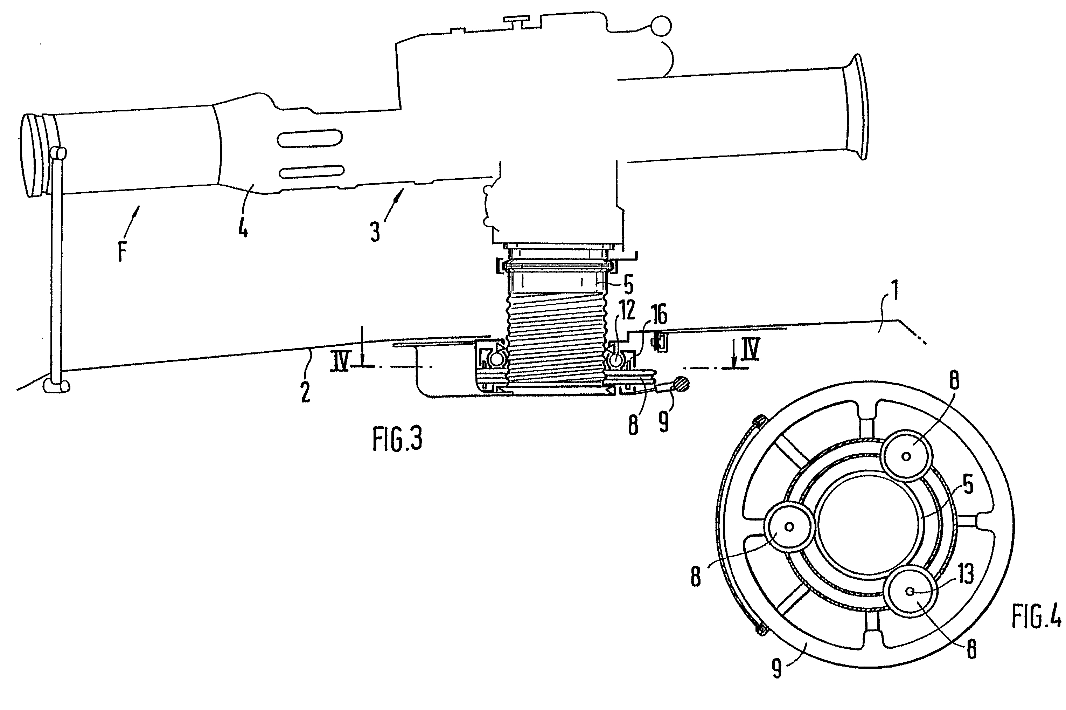

Die Waffenanlage 3 ist über ein Stellelement 6, welches mit einer Stützeinrichtung 7 kombiniert ist, in eine Feuerstellung F (Fig. 3) anhebbar und in eine Transportstellung T (Fig. 2) absenkbar. Das Element 6 umfasst mehrere Betätigungsrollen 8, welche an einem Handrad 9 gehalten sind, wobei die Rollen 8 in Eingriff mit einem Gewinde 10 des Rohrträgers 5 stehen. Der Eingriff erfolgt über umfangsseitig verlaufende Ringwülste 11, 11a, die der Form des Gewindes 10 angepasst und in diesem formschlüssig angeordnet sind. Es sind im gezeigten Ausführungsbeispiel in Axialrichtung der Rolle 8 gesehen, zwei nebeneinander angeordnete Ringwülste 11, 11a vorgesehen. Die Anzahl der Ringwülste sowie deren Anordnung zueinander ist in der Zeichnung nur beispielsweise gezeigt.

Gleichachsig mit jeder Betätigungsrolle 8 ist jeweils eine Halterolle 12 auf einem Drehzapfen 13 gelagert. Dieser ist endseitig in einer Konsole 14 abgestützt. Die Halterolle 12 steht über einen Ringwulst 15 in Eingriff mit einer am Fahrzeugaufbau 2 verbundenen Manschette 16, die hierzu eine mit dem Wulst 15 korrespondierende nutförmige Aufnahme 18 aufweist, welche umlaufend am Rohrträger 5 ist. Es sind jeweils drei Betätigungsrollen 8 und drei Halterollen 12 vorgesehen, die gleichmäßig verteilt am Umfang des Rohrträgers 5 angeordnet sind. Die Halterollen 12 sind in einer horizontalen Ebene oberhalb der Betätigungsrollen 8 gelagert, die in einer horizontalen Ebene X-X lagern. Das Handrad 9 ist unterseitig mit der Konsole 14 über Schrauben 17 befestigt.

Die rohrförmige Manschette 16 trägt ein Spannband 19 zum Festsetzen des Rohrträgers 5 gegen ein Verdrehen. Beim vertikalen Verschieben wird der Rohrträger 5 über einen Kulissenstein 25, der mit der Manschette 16 verbunden ist, und in einer axial verlaufenden Nut 26 des Rohrträgers 5 ragt, geführt.

Wenn die Waffenanlage 3 z. B. in der Transportstellung T steht und ein vertikales Anheben in die Feuerstellung F erfolgen soll, wird die Rohrverzurrung gelöst und das Handrad 9 in Pfeilrichtung 21 gedreht. Durch diese Verdrehung des in der Horizontalebene Y-Y drehbar abgestützten Handrades 9 wird der Rohrträger 5 mit angebundener Waffenanlage in in Pfeilrichtung 22 vertikal angehoben, ohne daß sich der Rohrträger 5 verdrehen kann. Eine axiale Abstützung erfolgt insbesondere über die Halterollen 12, welche sich ebenfalls mit den Betätigungsrollen 8 um den Rohrträger 5 einer Horizontalebene bewegen. Nach Erreichen der Feuerposition F wird über einen Endschalter 27 diese Position angezeigt und es erfolgt ein Festsetzen über Verzurrmittel 19. Zum Absenken der Waffenanlage 3 in die Transportposition T wird das Handrad 9 in Pfeilrichtung 23 verdreht.

## Patentansprüche

1. Vorrichtung zum vertikalen Verstellen einer Waffenanlage in einem gepanzerten Fahrzeug, die am Fahrzeugaufbau abgestützt und über ein mit einem ein Gewinde aufweisenden Rohrträger der Waffenanlage in Eingriff stehendem Stellelement in eine Feuer- und Transportposition einrichtbar ist, dadurch gekennzeichnet, daß das Stellelement (6) mehrere gleichmäßig am Umfang des Rohrträgers (5) verteilte und in einer horizontalen Ebene (X–X) angeordnete Betätigungsrollen (8) umfaßt, die in einem drehbaren Handrad (9) gehalten sind und mit diesen Betätigungsrollen (8) gleichachsig angeordnete und am Fahrzeugaufbau (2) abgestützte, am Handrad (9) gelagerte Halterollen (12) verbunden sind.

2. Vorrichtung nach Anspruch 1, dadurch gekennzeichnet, daß die Rollen (8) jeweils über mehrere Ringwülste (11, 11a) in Eingriffsverbindung mit dem Rohrträger (5) stehen.

3. Vorrichtung nach den Ansprüchen 1 oder 2, dadurch gekennzeichnet, daß die Halterollen (12) oberhalb der Betätigungsrollen (8) angeordnet und auf einem gemeinsamen Drehzapfen (13) gelagert sind, der in einer Konsole (14) gehalten wird, die mit dem Handrad (9) verbunden ist.

4. Vorrichtung nach einem oder mehreren der vorhergehenden Ansprüche, dadurch gekennzeichnet, daß die Halterollen (12) Ringwülste (15) umfassen, welche mit einer umlaufenden nutförmigen Aufnahme (18) in einer am Fahrzeugaufbau (2) gehaltenen Manschette (16) korrespondieren, die zwischen den Halterollen (12) und dem Rohrträger (5) angeordnet ist.

5. Vorrichtung nach einem oder mehreren der vorhergehenden Ansprüche, dadurch gekennzeichnet, daß die Manschette (16) ein oberes Spannband (19) für den Rohrträger (5) aufweist.

6. Vorrichtung nach Anspruch 1, dadurch gekennzeichnet, daß mit der Manschette (16) ein Kulissenstein (25) verbunden ist, der in Eingriff mit einer axial verlaufenden Nut (26) des Rohrträgers (5) steht.

## Claims

1. A device for the vertical adjustment of a gun turret in an armoured vehicle, which gun turret is supported on the vehicle structure and may be set into a firing and transportation position by means of an adjusting element engaged with a gun turret tube holder having a screw thread, characterised in that the adjusting element (6) comprises a plurality of actuating rollers (8) being distributed uniformly round the periphery of the tube holder (5) and being arranged in a horizontal plane (X–X) and being held in a rotatable hand wheel (9), and holding rollers (12) being arranged along the same axis being supported on the vehicle structure (2), and being mounted on the hand wheel (9) and being connected to the said actuating rollers (8).

2. A device according to Claim 1, characterised in that the rollers (8) each engage with the tube holder (5) by means of a plurality of annular beads (11, 11a).

3. A device according to Claim 1 or 2, characterised in that the holding rollers (12) are arranged above the actuating rollers (8) and are mounted on a common pivot pin (13) which is held in a bracket (14) connected to the hand wheel (9).

4. A device according to one or more of the preceding claims, characterised in that the holding rollers (12) comprise annular beads (15) which mate with an encircling groove-shaped recess (18) in a collar held on the vehicle structure (2) and being arranged between the holding rollers (12) and the tube holder (5).

5. A device according to one or more of the preceding claims, characterised in that the collar (16) has an upper tightening band (19) for the tube holder (5).

6. A device according to Claim 1, characterised in that a sliding block (25) engaging with an axial groove (26) in the tube holder (5) is connected to the collar (16).

## Revendications

1. Dispositif pour régler verticalement une tourelle de canon dans un véhicule blindé, laquelle est soutenue sur la superstructure du véhicule et peut être amenée en position de tir et en position de transport par l'intermédiaire d'un élément de réglage en prise avec un porte-tube de la tourelle de canon comportant un filetage, caractérisé en ce que l'élément de réglage (6) comporte plusieurs galets d'actionnement (8) disposés dans un plan horizontal (X–X) et répartis régulièrement sur la périphérie du porte-tube (5) lesquels galets d'actionnement sont tenus dans un volant à main (9) tournant, et en ce que des galets de maintien (12) disposés sur le même axe, soutenus sur la superstructure du véhicule (2) et montés sur le volant (9) sont reliés à ces galets d'actionnement (8).

2. Dispositif selon la revendication 1, caractérisé en ce que les galets (8) sont en prise avec le porte-tube (5) par l'intermédiaire de plusieurs bourrelets annulaires (11, 11a).

3. Dispositif selon la revendication 1 ou 2, caractérisé en ce que les galets de maintien (12) sont disposés au dessus des galets d'actionnement (8) et sont montés sur un tourillon commun (13) qui est tenu dans une console (14) reliée au volant (9).

4. Dispositif selon une ou plusieurs des revendications précédentes, caractérisé en ce que les galets de maintien (12) comportent des bourrelets annulaires (15) qui correspondent à un logement (18) circulaire dans une garniture en U (16) tenue sur la superstructure du véhicule (2), laquelle garniture est disposée entre les galets de maintien (12) et le portetube (5).

5. Dispositif selon l'une ou plusieurs des revendications précédentes, caractérisé en ce que la garniture en U (16) comporte un collier de serrage supérieur (19) pour le porte-tube (5).

6. Dispositif selon la revendication 1, caractérisé en ce qu'un coulisseau (25) est relié à la garniture (16) et est en prise avec une gorge (26) du porte-tube (5) s'étendant dans le sens axial.

FIG.1

FIG. 2

FIG.3

FIG.4

FIG.5

EP 0 234 027 B1